# EUROPÄISCHE PATENTSCHRIFT

(11) **EP 0 420 951 B1**
(45) Veröffentlichungstag und Bekanntmachung des Hinweises auf die Patenterteilung: **15.09.1993**
(21) Anmeldenummer: 90904750.8
(22) Anmeldetag: 22.03.1990
(51) Int. Cl.: B29C 65/20

(54) **HEIZVORRICHTUNG FÜR EINE SCHWEISSVORRICHTUNG**
HEATING DEVICE FOR A WELDING JIG
DISPOSITIF DE CHAUFFAGE POUR APPAREIL DE SOUDAGE

(30) Priorität: 10.04.1989 DE 3911633
(43) Veröffentlichungstag der Anmeldung: 10.04.1991
(73) Patentinhaber: Dommer, Armin, D-71254 Ditzingen (DE); Dommer, Dieter, D-71254 Ditzingen (DE)
(72) Erfinder: Dommer, Armin, D-71254 Ditzingen (DE); Dommer, Dieter, D-71254 Ditzingen (DE)
(74) Vertreter: Vogel, Georg
(86) Internationale Anmeldenummer: DE9000229
(87) Internationale Veröffentlichungsnummer: WO9011885

(56) Entgegenhaltungen:
- EP-A- 0 263 980
- CH-A- 667 316
- DE-A- 1 479 185
- DE-A- 2 734 910
- US-A- 3 391 045
- US-A- 3 729 360

## Beschreibung

Die Erfindung betrifft eine Heizvorrichtung für eine Schweißvorrichtung mit zwei Führungsholmen, auf denen Spannvorrichtungen zum Festlegen der miteinander zu verschweißenden Kunststoff-Rohrabschnitte oder Kunststoff-Formstücke angeordnet und gegeneinander verstellbar sind, bei der zwei halbringscheibenförmige, mit ihren Innenaufnahmen gegeneinander gerichtete elektrische Heizplatten verwendet sind, wobei der Radius der Innenaufnahmen der Heizplatten gleich oder größer ist als der Radius der Außenabmessung eines Innenrohres, auf das miteinander zu verschweißende Außenrohre aufgeschoben sind, wobei der Radius des Außenumfanges der Heizplatten größer ist als der Radius der Außenabmessung der Außenrohre und wobei die Heizplatten radial nach außen gerichtete Verlängerungen aufweisen.

Eine Heizvorrichtung dieser Art ist durch die CH-A 667 316 als bekannt ausgewiesen. Hierbei weist das ringförmige, in zwei Hälften entlang einer Trennlinie trennbare Heizelement radial abstehende Auflagenasen auf, die bezüglich der Trennlinie um etwa 90° versetzt angeordnet sind. Die Heizelement-Ringteile sind nach Erwärmen der Fügeflächen der Kunststoffrohre je um eine quer zur Rohrlängsachse verlaufende Achse verschwenkbar und entfernbar. Das Anbringen und Entfernen der Heizvorrichtung kann Schwierigkeiten ergeben.

In der EP-A 0 263 980 ist eine Vakuum-Heizvorrichtung angegeben, bei der zwei Hälften einer ringförmigen Klemme an der Fügestelle um die beiden miteinander zu verbindenen Kunststoffrohre gelegt wird. Die beiden Hälften sind an Verlängerungen in der Trennebene einerseits gelenkig gekoppelt und andererseits mit einem Schließmechanismus versehen. Eine Spannvorrichtung mit Führungsholmen ist nicht beschrieben.

Schweißvorrichtungen der eingangs beschriebenen Art werden vorzugsweise beim Verschweißen von in einem Graben verlegten Kunststoffrohren verwendet. Bei diesem Einsatz besteht für die miteinander zu verbindenden Kunststoff-Rohrabschnitte wenig Platz. Erschwert wird der Schweißvorgang noch dadurch, daß dabei oft eine Innenleitung vorhanden ist, auf die die Kunststoff-Rohrabschnitte als Schutzrohr aufgebracht und miteinander verschweißt werden müssen.

Es ist auch eine Heizvorrichtung mit zwei schwenkbar miteinander verbundenen Heizplatten bekannt, die senkrecht zu der durch die beiden Führungsholme definierten Ebene eingeführt wird. Die Heizplatten sind auseinandergeschwenkt auf die Innenleitung aufschiebbar. Die beiden Führungsholme der Schweißvorrichtung begrenzen jedoch den Öffnungswinkel der Heizvorrichtung. Für eine Innenleitung mit kleinem Durchmesser ist daher schon eine Schweißvorrichtung zu verwenden, bei der die Führungsholme einen ausreichend großen Abstand zueinander haben. Der Einsatz derartiger Schweißvorrichtungen erfordert aber einen breiten Graben.

Es ist Aufgabe der Erfindung, eine Heizvorrichtung der eingangs erwähnten Art zu schaffen, mit der auf ein Innenrohr aufgeschobene Außenrohre erwärmt werden können, wobei die Rüstzeit kurz und das Entfernen einfach sind.

Diese Aufgabe wird nach der Erfindung dadurch gelöst, daß die Verlängerungen im Bereich der freien Enden der Heizplatten angeordnet sind, daß in den Verlängerungen in deren einander zugekehrten Seiten zur Aufnahme der Führungsholme Ausnehmungen vorgesehen sind, und daß die Heizplatten an außerhalb der Ausnehmungen angeordneten Verbindungsstellen verbunden bzw. verbindbar sind.

Die Heizvorrichtung kann im geöffneten Zustand der Heizplatten parallel zur Verbindungsebene der Führungsholme aufgeschoben werden, ohne daß die Führungsholme den öffnungsbereich der Heizplatten begrenzen. Das Innenrohr kann daher einen Durchmesser aufweisen, der im Verhältnis zum Abstand der Führungsholme wesentlich größer sein kann, als bei bekannten Schweißvorrichtugnen und Heizvorrichtungen. Außerdem wird die aufgebrachte Heizvorrichtung durch die Führungsholme getragen und zentriert, was die Rüstzeit erheblich reduziert. Auch das Entfernen der Heizvorrichtung aus der Schweißvorrichtung wird nicht erschwert.

Die Heizvorrichtung läßt sich aus zwei fast identischen Heizplatten aufbauen, wenn vorgesehen ist, daß die Ausnehmungen jeweils zur Hälfte auf die beiden Heizplatten verteilt sind. Damit wird auch die Zentrierung zu den in den Spannvorrichtungen gehaltenen Kunststoff-Rohrabschnitten oder Kunststoff-Formstücken erleichtert. Zur exakten Zentrierung ist zudem vorgesehen, daß der mittlere Abstand der Ausnehmungen dem Abstand der Mittellängsachsen der beiden Führungsholme entspricht und daß die Ausnehmungen jeweils im halben Abstand zur Mitte der geschlossenen Heizplatten angeordnet sind.

Die Heizplatten lassen sich dadurch zu einer unlösbaren Einheit verbinden, daß die Heizplatten im Bereich der einen Verlängerungen gelenkig miteinander verbunden sind, wobei die Gelenkachse senkrecht zu den Heizflächen der Heizplatten steht oder daß die Heizplatten im Bereich der einen Verlängerungen verstellbar miteinander verbunden sind, wobei die Verstellrichtung senkrecht zur Trennebene der Heizplatten verläuft.

Die Sicherung der Heizplatten in der Schließstellung wird einfach dadurch erreicht, daß die anderen Verlängerungen der Heizplatten mittels eines Schnellverschlusses, z.B. Kniehebelverschlusses, miteinander verbindbar sind.

Eine bei der Erwärmung erforderliche Ausgleichsbewegung für die Heizplatten wird dadurch ermöglicht, daß die Ausnehmungen im Bereich der einen Verlängerungen als im Querschnitt halbkreisförmige oder rechteckförmige Nuten ausgebildet sind, die auf die halben Querschnittsabmessungen der Führungsholme abgestimmt sind und daß die Ausnehmungen im Bereich der anderen Verlängerungen zum Ende der Verlängerungen hin offen und in ihrer Tiefe auf den halben Durchmesser der Führungsholme abgestimmt sind.

Die Heizvorrichtung ist an dem einen Führungsholm gehalten, kann sich aber gegenüber dem anderen Führungsholm verschieben.

Die Erfindung wird anhand eines in den Zeichnungen dargestellten Ausführungsbeispiels näher erläutert. Es zeigt
- Fig. 1: in Seitenansicht die Heizvorrichtung in der ausgeschwenkten Öffnungsstellung der Heizplatten und
- Fig. 2: die Heizvorrichtung in der Schließstellung und Verbindungsstellung mit der Schweißvorrichtung.

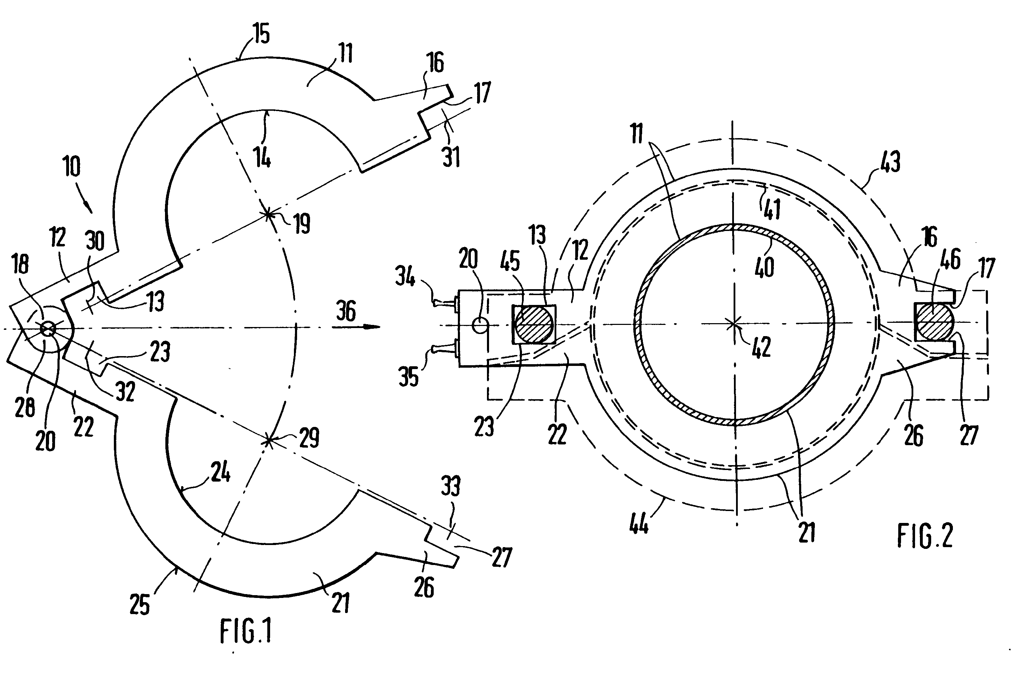

Die Fig. 1 zeigt, wie die beiden praktisch identischen Heizplatten 11 und 21 der Heizvorrichtung 10 um die Schwenkachse 20 verschwenkt und in eine Öffnungsstellung gebracht werden können. Die Heizplatten 11 und 21 sind halbringscheibenförmig, wobei die Innenaufnahmen 14 und 24 einen Radius von der Mitte 19 bzw. 29 aus aufweisen, der gleich oder größer ist als die halbe Außenabmessung des Innenrohres 40, auf das die miteinander zu verschweißenden Außenrohre 41 aufgeschoben werden. Diese Außenrohre 41 sind in Spannvorrichtungen gehalten, die aus den Hälften 43 und 44 bestehen und auf den beiden Führungsholmen 45 und 46 gehalten und verstellbar sind. Die Ausrichtung der Außenrohre 41 ist mit dem Spannvorrichtungen auf die Mittellängsachse 42 vorgenommen. Der Radius für den Außenumfang 15 bzw. 25 der Heizplatten richtet sich nach den Außenabmessungen der Außenrohre 41, er ist größer als der halbe Außendurchmesser der Außenrohre 41.

An den freien Enden der Heizplatten 11 und 21, die elektrische Heizelemente aufnehmen, welche über die Anschlüsse 34 und 35 mit Strom versorgt werden, sind die radial nach außen ragenden Verlängerungen 12 und 16 bzw. 22 und 26 angeformt. Die Verlängerungen 12 und 22 bilden Lageraugen 18 und 28 für die Schwenkachse 20, die beide Heizplatten 11 und 21 schwenkbar miteinander verbindet. Anstelle der Schwenklagerung kann auch ein Schiebemechanismus vorgesehen sein, der eine parallele Verschiebung der Heizplatten 11 und 21 zur Einstellung in eine Öffnungsstellung zuläßt.

Die Heizplatten 11 und 12 sind so miteinander verbunden, daß ihre Innenaufnahmen 14 und 24 gegeneinander gerichtet sind und in der Schließstellung eine Ringscheibe bilden. Die einander zugekehrten Seiten der Verlängerungen 12 und 16 bzw. 22 und 26 tragen Ausnehmungen 13 und 17 bzw. 23 und 27, die die Führungsholme 45 und 46 aufnehmen können. Ihr Abstand ist daher auf den Abstand der Führungsholme 45 und 46 abgestimmt. Die Ausnehmungen 13 und 23 bilden die Aufnahme für den Führungsholm 45, sie sind gleich groß, in ihrer Breite auf den Durchmesser des Führungsholmes 45 und in ihrer Tiefe auf den halben Durchmesser des Führungsholmes 45 abgestimmt. Der Abstand von der Mitte 30 bzw. 32 der Ausnehmung 13 bzw. 23 von der Mitte 31 bzw. 33 der Ausnehmung 17 bzw. 27 entspricht dem Abstand der Mittellängsachsen der Führungsholme 45 und 46, während der Abstand zur Mitte 19 bzw. 29 der Heizplatte 11 bzw. 21 jeweils halb so groß ist und dem Abstand der Längsmittelachsen der Führungsholme 45 und 46 von der Mittellängsachse 42 der Schweißvorrichtung entspricht. Damit die Heizvorrichtung beim Erwärmen eine Ausgleichsbewegung auf den Führungsholmen 45 und 46 machen kann, sind die Ausnehmungen 17 und 27 der Verlängerungen 16 und 26 nach außen offen. Wichtig ist noch, daß die Schwenkachse 20 oder der Schiebemechanismus außerhalb der Ausnehmungen 13 und 23 liegt und daß auch die Verlängerungen 16 und 26 in der Schließstellung der Heizvorrichtung 10 außerhalb des Führungsholmen 46 miteinander schnell lösbar verbunden werden. Dazu sind handelsübliche Schnellverschlüsse, wie Kniehebelverschlüsse oder dgl., geeignet. Die Heizplatten 11 und 21 können auf den einander zugekehrten Seiten der Verlängerungen 12, 16, 22 und 26 mit aufeinander abgestimmten Zentrieransätzen und -aufnahmen versehen sein. Die Anordnung kann unsymmetrisch sein, so daß identische Heizplatten 11 und 21 verwendet werden können.

Die Ausnehmungen 13 und 23 können auch einen halbkreisförmigen Querschnitt haben, der dem halben Querschnitt des Führungsholmes 45 entspricht.

Es ist leicht einzusehen, daß durch die Aufnahme der Führungsholme 45 und 46 im Bereich der Trennebene der beiden Heizuplatten 11 und 21 die Führungsholme 45 und 46 den Öffnungswinkel der Heizplatten nicht mehr so begrenzen, wie bei den bekannten Heizvorrichtungen, die senkrecht zur Verbindungsebene der Führungsholme auf das Innenrohr 40 aufgeschoben werden. Der Pfeil 36 zeigt an, wie die in Öffnungsstellung befindliche Heizvorrichtung 10 aufgeschoben wird und zwar zwischen den beiden Stirnseiten der in den beiden Spannvorrichtungen gehaltenen Außenrohre 41.

## Patentansprüche

1. Heizvorrichtung für eine Schweißvorrichtung mit zwei Führungsholmen, auf denen Spannvorrichtungen zum Festlegen der miteinander zu verschweißenden Kunststoff-Rohrabschnitte oder Kunststoff-Formstücke angeordnet und gegeneinander verstellbar sind, bei der zwei halbringscheibenförmige, mit ihren Innenaufnahmen gegeneinander gerichtete elektrische Heizplatten verwendet sind, wobei der Radius der Innenaufnahmen der Heizplatten gleich oder größer ist als der Radius der Außenabmessung eines Innenrohres, auf das miteinander zu verschweißende Außenrohre aufgeschoben sind, wobei der Radius des Außenumfanges der Heizplatten größer ist als der Radius der Außenabmessung der Außenrohre und wobei die Heizplatten radial nach außen gerichtete Verlängerungen aufweisen,
dadurch gekennzeichnet,
daß die Verlängerungen (12,16, 22,26) im Bereich der freien Enden der Heizplatten (11,21) angeordnet sind,
daß in den Verlängerungen (12,16, 22,26) in deren einander zugekehrten Seiten zur Aufnahme der Führungsholme (45,46) Ausnehmungen (13,17, 23,27) vorgesehen sind, und
daß die Heizplatten (11,21) an außerhalb der Ausnehmungen (13,17, 23,27) angeordneten Verbindungsstellen verbunden bzw. verbindbar sind.

2. Heizvorrichtung nach Anspruch 1,
dadurch gekennzeichnet,
daß die Ausnehmungen (13,17,23,27) jeweils zur Hälfte auf die beiden Heizplatten (11,21) verteilt sind.

3. Heizvorrichtung nach Anspruch 1 oder 2,
dadurch gekennzeichnet,
daß der mittlere Abstand der Ausnehmungen (13,17 bzw. 23,27) dem Abstand der Mittellängsachsen der beiden Führungsholme (45,46) entspricht und
daß die Ausnehmungen (13,17 bzw. 23,27) jeweils im halben Abstand zur Mitte (19,29) der geschlossenen Heizplatten (11,21) angeordnet sind.

4. Heizvorrichtung nach einem der Ansprüche 1 bis 3,
dadurch gekennzeichnet,
daß die Heizplatten (11,21) im Bereich der einen Verlängerungen (12,22) gelenkig miteinander verbunden sind, wobei die Gelenkachse (20) senkrecht zu den Heizflächen der Heizplatten (11,21) steht.

5. Heizvorrichtung nach einem der Ansprüche 1 bis 3,
dadurch gekennzeichnet,
daß die Heizplatten (11,21) im Bereich der einen Verlängerungen (12,22) verstellbar miteinander verbunden sind, wobei die Verstellrichtung senkrecht zur Trennebene der Heizplatten (11,21) verläuft.

6. Heizvorrichtung nach Anspruch 4 oder 5,
dadurch gekennzeichnet,
daß die anderen Verlängerungen (16,26) der Heizplatten (11,12) mittels eines Schnellverschlusses, z.B. Kniehebelverschlusses, miteinander verbindbar sind.

7. Heizvorrichtung nach einem der Ansprüche 4 bis 6,
dadurch gekennzeichnet,
daß die Ausnehmungen (13,23) im Bereich der einen Verlängerungen (12,22) als im Querschnitt halbkreisförmige oder rechteckförmige Nuten ausgebildet sind, die auf die halben Querschnittsabmessungen der Führungsholme (45,46) abgestimmt sind.

8. Heizvorrichtung nach einem der Ansprüche 4 bis 7,
dadurch gekennzeichnet,
daß die Ausnehmungen (17,27) im Bereich der anderen Verlängerungen (16,26) zum Ende der Verlängerungen hin offen und in ihrer Tiefe auf den halben Durchmesser der Führungsholme (45,46) abgestimmt sind.

## Claims

1. Heating device for a welding jig, including two guide spars on which are arranged mutually adjustable clamping devices for holding the portions of plastics material pipes or plastics material mouldings to be welded together, wherein two electrical heating plates are employed, which are in the form of semi-annular discs and have facing internal recesses, the radius of the internal recesses of the heating plates being equal to or greater than the radius of the external dimension of an internal pipe, on which are fitted external pipes to be welded together, the radius of the outer cicumference of the heating plates being greater than the radius of the external dimension of the external pipes, and the heating plates having extensions which extend radially outwardly, characterised in that the extensions (12,16, 22,26) are disposed in the region of the free ends of the heating plates (11,21), in that cutaway portions (13,17, 23,27) are provided in the extensions (12,16, 22,26), in their sides facing one another, for receiving the guide spars (45,46), and in that the heating plates (11,21) are connected, or respectively are connectable, at connecting points disposed externally of the cutaway portions (13,17, 23, 27).

2. Heating device according to claim 1, characterised in that up to half the cutaway portions (13,17, 23,27) are distributed over the two heating plates (11,21).

3. Heating device according to claim 1 or 2, characterised in that the central spacing between the cutaway portions (13,17 or respectively 23,27) corresponds to the spacing between the central longitudinal axes of the two guide spars (45,46), and in that the cutaway portions (13,17 or respectively 23,27) are each disposed halfway towards the centre (19,29) of the closed heating plates (11,21).

4. Heating device according to one of claims 1 to 3, characterised in that the heating plates (11,21) are pivotally interconnected in the region of one of the extensions (12,22), the pivotal axis (20) extending perpendicular to the heating surfaces of the heating plates (11,21).

5. Heating device according to one of claims 1 to 3, characterised in that the heating plates (11,21) are adjustably interconnected in the region of one of the extensions (12,22), the direction of adjustment extending perpendicular to the junction of the heating plates (11,21).

6. Heating device according to claim 4 or 5, characterised in that the other extensions (16,26) of the heating plates (11,12) are interconnectable by means of a snap closure, e.g. a toggle lever closure.

7. Heating device according to one of claims 4 to 6, characterised in that the cutaway portions (13,23) in the region of one of the extensions (12,22) are in the form of grooves, which have a semi-circular or rectangular cross-section and are adapted to have half the cross-sectional dimensions of the guide stays (45,46).

8. Heating device according to one of claims 4 to 7, characterised in that the cutaway portions (17,27) in the region of the other extensions (16,26) are open towards the end of the extensions and are adapted, in respect of their depth, to half the diameter of the guide stays (45,46).

## Revendications

1. Dispositif de chauffage pour une appareil de soudage avec deux longerons de guidage, sur lesquels sont disposés et mutuellement réglables des dispositifs de serrage pour le blocage des tronçons de tubes en matière plastique ou des pièces moulées en matière plastique qui doivent être reliés par soudage, dispositif de chauffage faisant appel à deux plaques de chauffage de forme semi-circulaire dont les logements intérieurs se font face l'un à l'autre, le rayon des logements intérieurs des plaques de chauffage étant égal ou supérieur au rayon de la dimension extérieure d'un tube intérieur, sur lequel sont glissés des tubes extérieurs qui doivent être reliés par soudage, le rayon du contour extérieur des plaques de chauffage étant supérieur au rayon de la dimension extérieure des tubes extérieurs et les plaques de chauffage présentant des prolongements dirigés vers l'extérieur,
caractérisé par le fait
que les prolongements (12, 16, 22, 26) sont disposées dans la région des extrémités libres des plaques de chauffage (11, 21),
que dans les faces orientées l'une vers l'autre des prolongements (12, 16, 22, 26) sont prévus des évidements (13, 17, 23, 27) pour la réception des longerons de guidage (45, 46), et
que les plaques de chauffage (11, 21) sont reliées ou peuvent être reliées en des points de jonction disposés en dehors des évidements (13, 17, 23, 27),
que les points de jonction des plaques de chauffage (11, 21) sont disposés dans les régions des prolongements (12, 16, 22, 26) situés en dehors de ces évidements (13, 17, 23, 27) pour des longerons de guidage (45, 46).

2. Dispositif de chauffage suivant la revendication 1,
caractérisé par le fait
que les évidements (13, 17, 23, 27) sont distribués par moitié sur les deux plaques de chauffage (11, 21).

3. Dispositif de chauffage suivant la revendication 1 ou la revendication 2,
caractérisé par le fait
que la distance moyenne des évidements (13, 17 ou 23, 27) correspond à la distance des axes médians longitudinaux des deux longerons de guidage (45, 46) et
que les évidements (13, 17 ou 23, 27) sont chacun disposés à mi-distance du centre (19, 29) des plaques de chauffage (11, 21) fermées.

4. Dispositif de chauffage suivant l'une quelconque des revendications de 1 à 3,
caractérisé par le fait
que dans la région d'un groupe de prolongements (12, 22), les plaques de chauffage (11, 21) sont reliées par articulation, l'axe d'articulation (20) étant perpendiculaire aux surfaces de chauffage des plaques de chauffage (11, 21).

5. Dispositif de chauffage suivant l'une quelconque des revendications de 1 à 3,
caractérisé par le fait
que dans la région d'un groupe de prolongements (12, 22), les plaques de chauffage (11, 21) sont reliées de manière réglable, la direction de réglage étant orientée perpendiculairement au plan de séparation des plaques de chauffage (11, 21).

6. Dispositif de chauffage suivant la revendication 4 ou la revendication 5,
caractérisé par le fait
que les prolongements de l'autre groupe de prolongements (16, 26) des plaques de chauffage (11, 12) peuvent être reliés au moyen d'une fermeture rapide, par exemple une fermeture à genouillère.

7. Dispositif de chauffage suivant l'une quelconque des revendications de 4 à 6,
caractérisé par le fait
que dans la région d'un groupe de prolongements (12, 22), les évidements ont la forme d'encoches à section transversale semi-circulaire ou rectangulaire, harmonisées avec les demi-dimensions de section transversale des longerons de guidage (45, 46).

8. Dispositif de chauffage suivant l'une quelconque des revendications de 4 à 7,
caractérisé par le fait
que dans la région de l'autre groupe de prolongements (16, 26), les évidements (17, 27) sont ouverts en direction de l'extrémité des prolongements et que leur profondeur est harmonisée avec la moitié du diamètre des longerons de guidage (45, 46).
